Europäisches Patentamt

European Patent Office

Office européen des brevets

(11) Publication number: **0 325 806**
A1

# EUROPEAN PATENT APPLICATION

(21) Application number: 88202412.8

(51) Int. Cl.4: **F16L 27/12 , H02G 3/06**

(22) Date of filing: 28.10.88

(30) Priority: 21.01.88 IT 1914488

(43) Date of publication of application:
02.08.89 Bulletin 89/31

(84) Designated Contracting States:
AT BE CH DE ES FR GB GR IT LI LU NL SE

(71) Applicant: S.I.F.E, SOCIETA' ITALIANA
FORNITURE ELETTRICHE S.p.A.
Via Teglio 11
Milano(IT)

(72) Inventor: Balzanelli, Vincenzo
Via Marcantonio Colonna 27
Milan(IT)

(74) Representative: Raimondi, Alfredo, Dott. Ing.
Prof. et al
Studio Tecnico Consulenza Brevetti Piazzale
Cadorna 15
I-20123 Milano(IT)

(54) Sealed extensible coupler for connecting pipes having threaded ends, especially for containing electrical conductors.

(57) The sealed extensible coupler for connecting pipes having threaded ends, adapted for the connection of two aligned, contiguous portions of pipe (3)-(12), according to this invention, is composed of two tubular elements (1)(10) threaded internally at the opposite ends (2)(11), slidably and rotatably inserted the one inside the other with the interposition of sealing means (6), having a relative sliding length at least equal to the maximum screwing-up length intended for the threaded end (2)(11) of one of the elements (1)(10) onto one of the portions of pipe, adapted for permitting the connecting together of the pipe portions (3)(12) without requiring axial movements of same and in such a manner as to operate as a compensator for the dimensional variations of the portions of pipe themselves.

Fig. 1

## Sealed extensible coupler for connecting pipes having threaded ends, especially for containing electrical conductors

The subject of the present invention is a sealed extensible coupler for connecting pipes having threaded ends, adapted for the connection of two aligned, contiguous portions of pipe, and for compensating their dimensional variations.

For the construction of electrical installations, in particular in the case of industrial installations, adapted for offering guarantees of safety in particular applications, such as chemical plants, heating plants, public buildings and rooms and the like, where the construction of sealed installations is required, pipes for housing the electrical cables are used, appropriately constructed of self-extinguishing plastics materials, by means of which the cables are protected from accidental contact with the environment.

Such pipes are usually externally threaded at the ends and are connected by the threaded zones to the various devices located in their vicinity, such as electrical panels, switches, sockets and the like.

In the construction of such electrical installations, the necessity frequently arises for connecting together portions or lengths of pipe equipped with end threads, which portions, for various reasons of installation, are already fixed at the opposite ends and, at least partly, along their length as well. In such cases, it is not possible to construct the joint by means of an internally threaded sleeve, sealingly tightened onto the external threaded zone of one of the portions of pipe, into which the other pipe portion is screwed, because both the pipe portions are fixed and cannot be rotated for the screwing up operation.

The connection may then be carried out with the use of conventional sleeves in a laborious manner, usually by deforming and axially displacing one of the pipe portions, which in the majority of cases results in a connection with a bad seal, which is moreover difficult to make to the desired accuracy, with poor linearity of the pipe as a whole.

A further disadvantage in the installing of rigid pipes for housing cables arises from the dimensional variations in the material of which they are constructed, for example as a result of thermal fluctuations, which give rise to loadings on the support devices and end fixing of the pipes or, in the case of expansion, to lateral deflections of the piping.

The requirement therefore arises for providing a coupler for threaded pipes, especially for electrical installations, which shall make possible the connecting together of two facing portions of pipe, easily and without axial displacement of the pipe portions themselves, and which moreover shall enable dimensional variations that occur to be compensated.

Said results are achieved by the present invention, which provides a sealed extensible coupler for the connecting together of pipes having threaded ends, adapted for connecting together two aligned, contiguous pipe portions, characterized by the fact that it is composed of two tubular elements, internally threaded at the opposite ends, inserted slidably and rotatably the one into the other with the interposition of sealing means, having a relative sliding length at least equal to the maximum screwing-up length intended for the threaded end of one of the elements onto one of the portions of pipe.

The extensible coupler according to this invention also comprises fixing means for preventing escape of one of the elements with respect to the other, beyond the maximum designed extension.

The sealing means are composed of a ring of elastomeric material housed in a seating corresponding to it of the internal element, the ring being sealingly slidable against an associated zone of the internal surface of the external element.

The fixing means for preventing escape of one of the elements relative to the other beyond the maximum intended extension are composed of an outwardly projecting annular flange situated at the end of the internal tubular element inserted inside the external tubular element, this flange having a front surface which is conical, facing towards the end of the internal tubular element, and a plane rear surface, an annular projection being present inside the external tubular element, this annular projection projecting into a position of interference with the flange of the internal element in the position of maximum intended extension, the internal element being furthermore equipped, near to the flange, with longitudinal notches adapted for imparting elastic deformability to the flange itself.

The tubular elements both possess external surfaces having flat portions, adapted for permitting gripping by rotating tools.

Further details can be found from the following description, by reference to the attached drawings, in which there are shown:

in Figure 1, the sleeve coupler according to this invention, partly in section, in the closed position;

in Figure 2, the sleeve coupler of Figure 1 in an extended position.

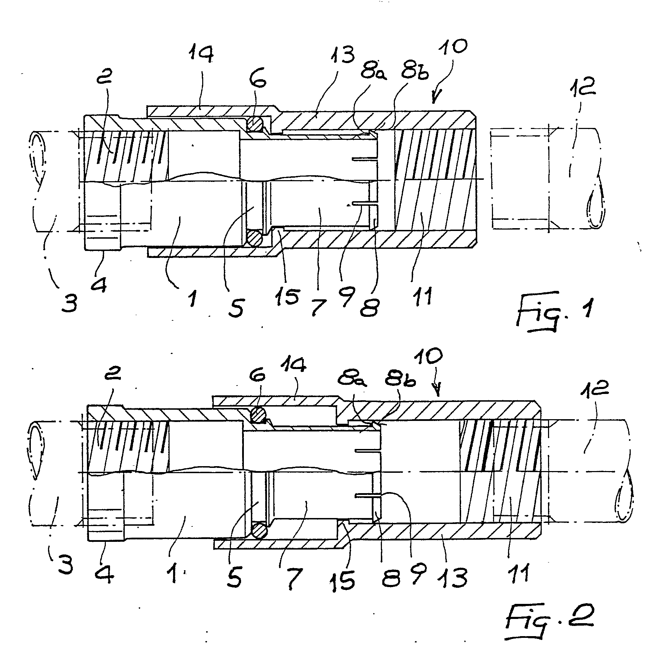

As shown in Figure 1, the sleeve coupler according to this invention is composed of a first, male element 1, equipped with an internally threaded end zone 2, adapted for being sealingly screwed, with the possible interposition of sealing material, onto the externally threaded end zone of a portion or length 3 of a pipe for containing electrical conductors, indicated in dot-and-dash line in the Figure.

The male element 1 possesses a zone 4, having a prismatic or similar external surface, adapted to be gripped for screwing, and carries the seating 5 for a sealing ring 6, followed by an end zone 7 equipped with a retaining flange 8, equipped with notches 9 adapted for imparting to the flange itself an elastic deformability.

The sleeve coupler comprises, in addition, a female element 10, into which the male element 1 is inserted, the female element being equipped with an internally threaded end zone 11, adapted for being sealingly screwed, with the possible interposition of sealing material, onto the externally threaded end zone of a second portion or length 12 of pipe for containing electrical conductors, indicated in dot-and-dash line in the Figure, which pipe length is required to be connected to the pipe length 3.

, The female element 10 possesses a zone 13, equipped with a prismatic external surface, or appropriately shaped to permit gripping for screwing up; at the opposite end to the threaded zone 11 there is a zone 14, equipped with a cylindrical internal surface having a diameter adapted for permitting a sealed mating with the ring 6, and for permitting, with fraction, the axial sliding end rotation of the element 10 with respect to the element 1.

In correspondence with the internal end of the zone 14, there is present an internal annular projection 15, against which the plane surface 8a of the flange 8 comes into abutment when the assembly is in conditions of maximum extension, thereby preventing escape of the element 1 from the element 10.

The assembling of the two elements, the one into the other, is made possible by the conical surface 8b of the flange 8, and by the notches 9, which allow to the flange 8 itself an elastic deformability sufficient to enable it to pass beyond the projection 15.

The coupler according to this invention may be fitted for connecting together the pipe portion 3 with the pipe portion 12, leaving a fixed gap between the ends of the two pipe portions.

The zone 2 can then be screwed onto the end threaded zone of the first pipe portion 3, if necessary by inserting a sealing strip or the like and, at the final screwing up, by placing the coupler in the position of minimum length, it is possible to insert the coupler into the space left between the two pipe portions, with the threaded zone 11 adjacent to the end of the second pipe portion 12, as shown in Fig. 1.

As can be seen from Figure 1, the gap between the ends of the pipe portions is with advantage approximately equal to the overall length of the coupler itself, less the length of the threaded section of the pipe portion 3, which is intended to be screwed into the threaded zone 2, without however any special accuracy in the dimensioning of said gap being necessary.

When the screwing of the threaded zone 2 onto the pipe portion 3 has been completed, the element 1 now being kept fixed, screwing-up of the zone 11 of the element 10 onto the end threaded zone of the pipe portion 12 now commences, progressively extending the coupler with sliding of the sealing ring 6 on the internal surface of the zone 14, until complete tightening is achieved, with packing of the threaded zone if necessary.

The sliding length of the coupler, that is to say the extent of the zone 14 and, correspondingly, that of the zone 7, is advantageously made larger than the maximum screwing-up length of the pipe portion 12 inside the zone 11.

In this manner, as shown in Figure 2, in the installed condition the coupler is incompletely extended: in the presence of dimensional variations of the joined pipe portions, for example in the case of thermal expansion or contraction, the coupler can fulfil the function of a telescopic expansion compensator, accepting later expansions or contractions without such expansions or contractions, as commonly occurs in the known piping systems equipped with rigid connections, causing loads at the end or intermediate fixings or causing deformations and flexure.

The presence of the sealing ring 6, in combination with the fact that the connections on the threaded zones 2 and 11 can be carried out in the optimum manner, with complete tightening and without the need for later loosening, assures for the coupler a completely tight seal, without any risk of the connecting device for the pipe portions for containing electrical conductors being a point of weakness for the purposes of safety of the electrical installation.

Numerous variants can be introduced, without thereby departing from the scope of the present invention, in its general characteristics.

## Claims

1. Extensible coupler for the connection of pipes having threaded ends, adapted for connecting together two aligned, contiguous portions of pipe, characterized by the fact that it is composed of two tubular elements, internally threaded at the opposite ends, slidably and rotatably inserted the one into the other with the interposition of sealing means, the elements having a relative sliding length at least equal to the maximum screwing-up length intended for the threaded end of one of the elements into one of the portions of pipe.

2. Extensible coupler according to Claim 1, characterized by the fact that it comprises fixing means for preventing the escape of one of the elements from the other beyond the maximum intended extension.

3. Extensible coupler according to Claim 1, characterized by the fact that the sealing means are composed of a ring of elastomeric material, seated in a seating corresponding to it of the internal element, and sealingly slidable against an associated zone of the internal surface of the external element.

4. Extensible coupler according to Claim 2, characterized by the fact that the fixing means for preventing escape of one of the elements from the other beyond the maximum intended extension are composed of an outwardly projecting annular flange situated at the end of the internal tubular element inserted into the external tubular element, the flange having a front surface which is conical, facing towards the end of the internal tubular element, and a plane rear surface, there being present inside the external tubular element an annular projection, projecting into a position of interference with the flange of the internal element in the position of maximum intended extension, the internal element being, furthermore, equipped in the vicinity of the flange with longitudinal notches adapted for imparting elastic deformability to the flange itself.

5. Extensible coupler according to Claim 1, characterized by the fact that the tubular elements both have external surfaces possessing flat portions adapted for permitting gripping by rotating tools.

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-A- 441 894 (NUSSBAUM) * Figures; column 1, line 3 - column 3, line 25 * | 1 | F 16 L 27/12 H 02 G 3/06 |
| X | US-A-4 687 232 (ZIMMERMAN) * Figures 1,11; abstract * | 1-3 | |
| A | | 5 | |
| A | EP-A-0 055 003 (WAVIN B.V.) * Figure 2 * | 4 | |
| A | FR-A- 370 946 (CHRISTIE) * Figure 3 * | 5 | |

TECHNICAL FIELDS SEARCHED (Int. Cl.4)

F 16 L
H 02 G

The present search report has been drawn up for all claims

| Place of search | Date of completion of the search | Examiner |
|---|---|---|
| THE HAGUE | 04-04-1989 | NARMINIO A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)